# EUROPEAN PATENT APPLICATION

(11) **EP 1 334 790 A2**
(43) Date of publication of application: **13.08.2003**
(21) Application number: 03075384.2
(22) Date of filing: 10.02.2003
(51) Int. Cl.: B23D 59/02, B23D 61/02, B28D 1/04, B28D 1/12

(54) **Sawing arrangement and saw blade with integrated cooling means**

(30) Priority: 12.02.2002 NL 1019947
(71) Applicant: Betonboor Bleeker B.V., 9672 BH Winschoten (NL)
(72) Inventor: Bleeker, Derk Jan, 9672 BH Winschoten (NL); Van Kempen, Hans Robert, 1611 LC Bovenkarspel (NL); Bel, Cornelis Teun, 5613 LL Eindhoven (NL)

(57) **Abstract**

The invention relates to a sawing arrangement for sawing material like for example concrete, stone or asphalt. In the saw blade (4), a ring of holes (11,25) and a number of channels (13,26) is made, which channels (13,26) end near cutting faces of the saw blade (4). With the aid of cup-shaped elements (20a,20b,23), mounted close to the saw blade (4), the liquid is supplied to the holes (11,25).

## Description

The invention relates to a sawing arrangement provided with at least one saw blade, for sawing a material like concrete, stone or asphalt, which saw blade is provided with a cavity through which a cooling medium may flow under operational conditions.

A sawing arrangement of this kind is known from US-A-6099080. In the known sawing arrangement, air is guided through and between the saw blades, on the one hand for cooling the saw blades and on the other hand for carrying off dust, which is set free during sawing towards a dust filter in which it is collected.

The present sawing arrangement utilises a liquid, normally water, as a cooling means. It is not necessary then to flush the liquid excessively alongside and through the saw blade, because the cooling capacity of a liquid is much higher than the cooling capacity of air. In fact it is sufficient to cool only the cutting faces of the saw blade. It is also important to use as little cooling liquid as possible, because sawing arrangements of this kind generally can store only a limited amount of liquid and additional liquid must be supplied in storage tanks. One of the aims of the inventive sawing arrangement is therefore to realise an adequate cooling of the saw blade with a minimal use of cooling liquid. The sawing arrangement is thereto characterised in that it is provided with supply means for supplying a liquid as a cooling medium and that the cavitiy comprises a number of channels of which first ends end near cutting faces of the saw blade. An additional advantage of cooling by means of a liquid is that the liquid has also a lubricating effect, which will reduce the wear of the saw blade and which will passivate and remove the grinding dust which is set free when sawing. The liquid which is removed with the grinding dust in it can usually be collected and filtered, for example with the aid of a cyclone, well known in the art. Next, the filtered liquid can be reused, so that the amount of liquid used can be further reduced and pollution of the vicinity of the sawing work is prevented.

A favourable embodiment according to a further aspect of the invention, with which the consumption of cooling liquid can be reduced even further, is characterised in that the supply means are arranged for supplying liquid at least substantially exclusively to those channels which end near cutting faces which touch the material, as a result of which only those cutting faces will be cooled which contact the material to be sawed.

A further favourable embodiment of the inventive sawing arrangement is characterised in that the second ends of the channels end in a ring of holes in the saw blade, which ring of holes is positioned symmetrically round a main axis of the saw blade, via which ring of holes the cooling liquid can be supplied relatively easily. Preferably, a ring of holes is present on both sides of the saw blade, so that the liquid can be supplied symmetrically to the saw blade and warping and buckling is prevented.

A further embodiment of the inventive sawing arrangement which can easily be implemented, is characterised in that the supply means comprise at least one cup-shaped element which connects to at least part of the holes to which the liquid is supplied. The liquid then flows into the holes that are positioned within the cup-shaped element and will flow via the corresponding channels to the corresponding cutting faces.

A further favourable embodiment, in which the shape of the channels in combination with gravity results in substantially all water reaching the actively cutting faces, is characterised in that the cup-shaped element encloses substantially all holes on one side of the saw blade.

A further favourable embodiment is characterised in that two cup-shaped elements are provided, placed on opposite sides of the saw blade, in such a way that both rings of holes, positioned on opposite sides of the saw blade, can be provided with liquid.

A favourable alternative embodiment is characterised in that the saw blade is tubular shaped for sawing circular holes, in such a way that a core of the material can be removed as a whole.

The invention also relates to a saw blade, provided with a cavity, through which a cooling medium may flow under operational conditions. The inventive saw blade is characterised in that the saw blade is provided with number of channels, of which first ends end near cutting faces of the saw blade and of which second ends end in a circle of holes which are positioned symmetrically round a main axis of the saw blade.

A favourable embodiment of the inventive saw blade is characterised in that the saw blade comprises a sandwich of a first outer blade, an inner blade provided with at least substantially radially extending cavities and a second outer blade, where at least one outer blade is provided with a circle of holes which are positioned symmetrically round a main axis of the saw blade, in such a way that the holes connect to the cavities in the inner blade.

The invention will now be further explained with a reference to the following figures, in which:
- Fig. 1: schematically represents a possible embodiment of a sawing arrangement according to the invention;
- Fig. 2: schematically represents a possible embodiment of a saw blade according to the invention in side view;
- Fig. 3: schematically represents a possible embodiment of a saw blade according to the invention in cross section;
- Fig. 4: schematically represents a saw blade provided with supply means in cross section;
- Fig. 5: schematically represents a flange;
- Fig. 6A: schematically represents a tubular shaped saw blade in cross section;
- Fig. 6B: schematically represents this saw blade in bottom view.

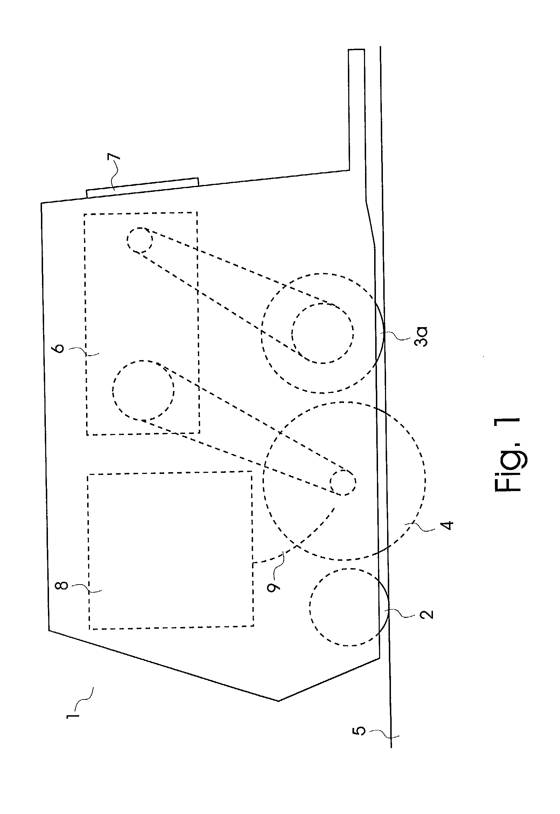

Fig. 1 schematically represents a possible embodiment of a sawing arrangement 1 according to the invention, comprising a vehicle having a front wheel 2 and two back wheels 3a, 3b, of which only wheel 3a is visible in this figure and between which a saw blade 4 is placed which saws a slot in for example a road surface 5. Back wheels 3a,3b and saw blade 4 are connected in an obvious manner to a drive 6 and are controlled with the aid of a control panel 7. For cooling the saw blade 4, a supply vessel 8 is provided, filled with water which is supplied to saw blade 4 via a supply pipe 9. If desired, a collecting tray, not shown in the figure may be placed round saw blade 4, near road surface 5, for collecting water splashing around, which water may be returned to supply vessel 8, possibly after being filtered. In this way, the consumption of water can be reduced and pollution of the road surface 5 with water mixed with grinding dust is prevented.

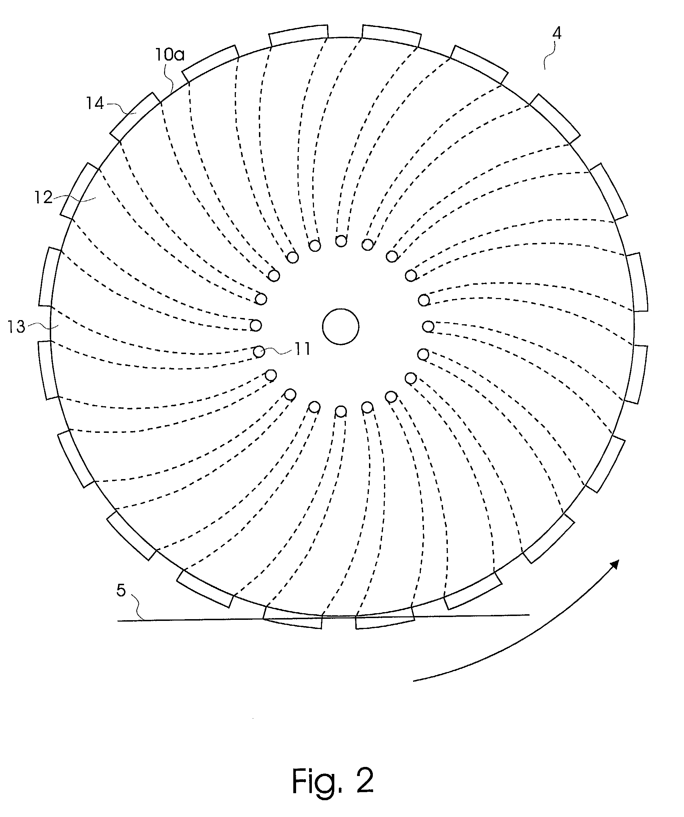

Fig. 2 schematically represents a possible embodiment of a saw blade 4 in side view. Saw blade 4 consists of a sandwich of two outer blades 10a, 10b, preferably made of steel, in which a ring of holes 11 is made, via which cooling water can be supplied, and an inner blade 12, located between the outer blades 10a,10b, into which channels 13 have been made which connect to the ring of holes 11 and via which the cooling water is guided to the outer edge of the sandwich. Onto the edge of the sandwich, blocks 14 are fixed, made of a hard material, like tungsten, into which diamond powder is incorporated. In order to prevent blocks 14 from overheating during the sawing action, they have to be cooled. Obviously, only the blocks that contact road surface 5 must be cooled. According to the invention this can be realised by supplying water only to the lowest hole or the lowest holes.

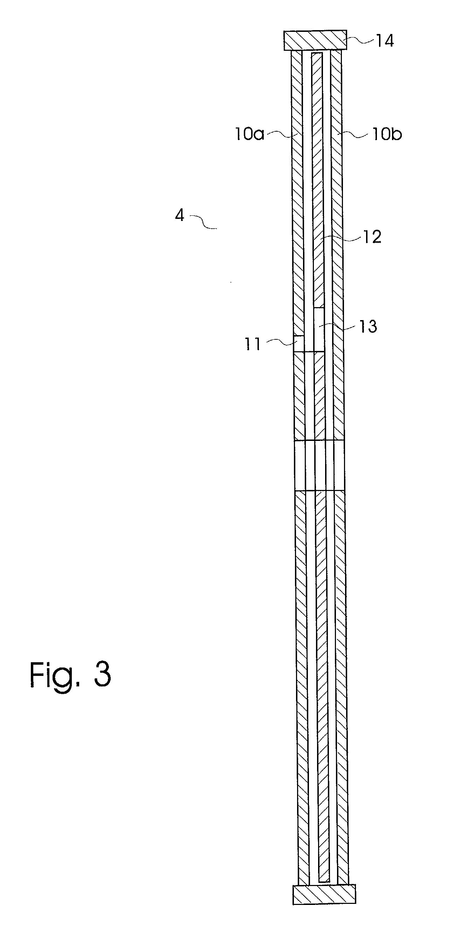

Fig. 3 schematically represents a possible embodiment of a saw blade according to the invention in cross section, with two outer blades 10a, 10b, in which a ring of holes 11 is made, via which the cooling water can be supplied, and an inner blade 12 which is positioned between the outer blades 10a,10b, in which channels 13 have been made which connect to the ring of holes 11 and via which the cooling water is guided to the outer edge of the sandwich. Onto the edge of the sandwich, blocks 14 are fixed, made of a hard material, like tungsten, into which diamond powder is incorporated. In the figure, spaces have been left open by way of illustration between the outer blades 10a,10b and inner blade 12. In reality, all blades are packed together and are connected for example by spot welds or with the aid of an adhesive.

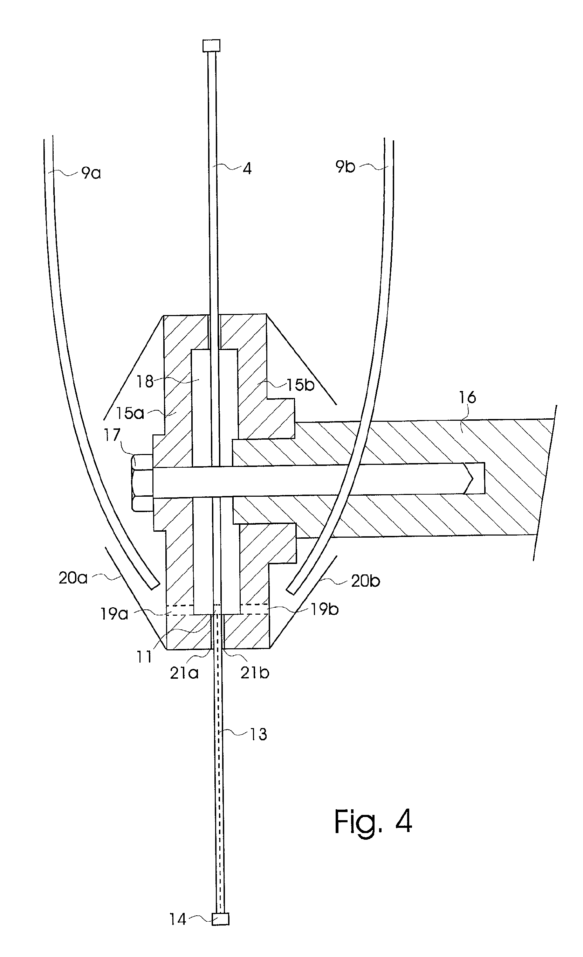

Fig. 4 schematically represents a saw blade 4 provided with supply means in cross section. Saw blade 4 is mounted to a driving shaft 16 with the aid of two flanges 15a,15b and a bolt 17. Both flanges 15a, 15b are made such that a cavity 18 is formed, which form two cup-shaped elements into which the ring of holes 11 neatly fits. Flanges 15a,15b are also each provided with a ring of holes, respectively 19a,19b and onto flanges 15a,15b two conical shaped collars have been fixed. When sawing arrangement 1 is used, water is supplied to the two collars 20a,20b with the aid of two supply pipes 9a,9b. This water lands in cavity 18 via the rings of holes 19a,19b and flows via the ring of holes 11 into saw blade 4 and via a channel 13, indicated by a broken line, towards the blocks 14 to be cooled. As it takes some time before the water reaches a block, it may happen that the water does not exactly ends near the lowest block. In order to prevent this, the channels 13 in saw blade 4 are given a small curvature, as shown in Fig. 2. The necessary curvature can be determined experimentally for a chosen number of revolutions of saw blade 4.

In the embodiment shown here, saw blade 4 is moreover cooled via rings of narrow, radially extending channels 21a,21b, which have been made in flanges 15a,15b. Water, which is pushed into these channels by centrifugal forces, will be atomised at the moment it leaves the channels and will keep saw blade 4 wet. In the embodiment shown here, the cooling is installed symmetrically round saw blade 4, with two supply pipes, two collars and two rings of holes. Often, a sufficient cooling for saw blade 4 can be obtained with a single sided cooling. It is also possible to provide cavity 18 with water via a drilled through driving shaft 16, via a rotatable coupling, well known in the art. The supply pipes 9a,9b, the rings of holes 19a,19b and the collars 20a,20b are no longer needed then.

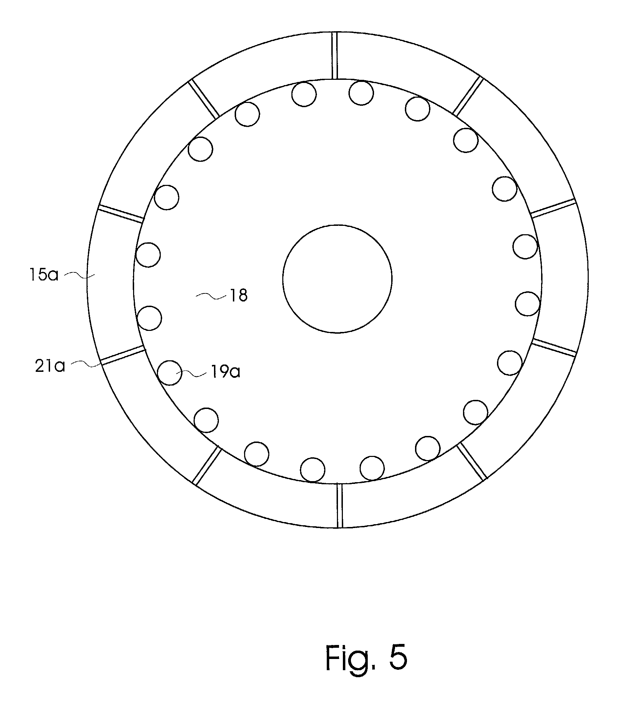

Fig. 5 schematically represents a flange 15a, seen from the position of saw blade 4, provided with a cavity 18, a ring of holes 19a and a number of narrow channels 21a.

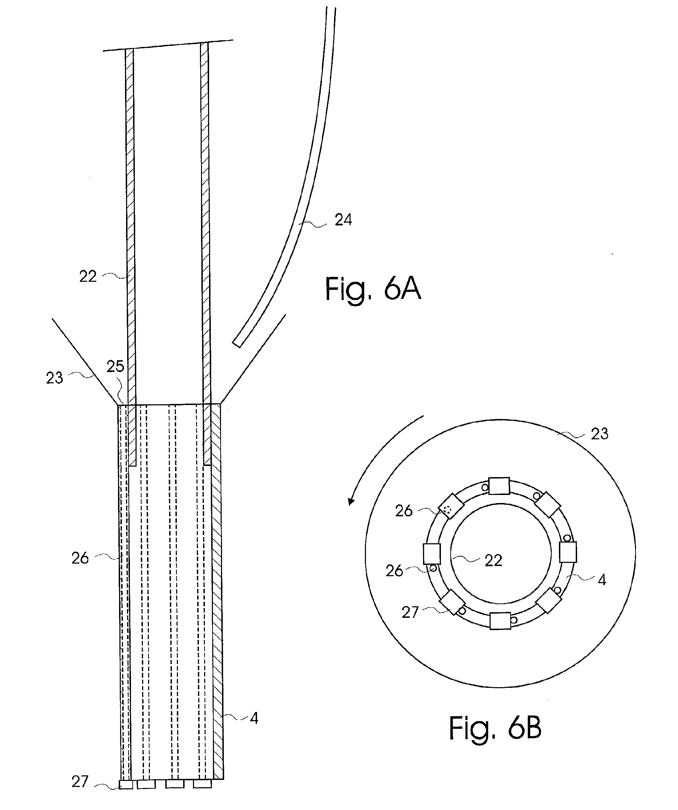

Fig. 6A schematically represents a tubular shaped saw blade 4 provided with supply means in cross section, with which circular holes can be sawed, so that a core of the material to be sawed can be removed in its entirety. Saw blade 4 is connected to a tube 22 which is placed into a drilling machine, known as such and not shown here, with which saw blade 4 is rotated under operational conditions. Round the top side of saw blade 4, a conical shaped collar 23 is mounted which forms a cup-shaped element into which water is fed via a supply pipe 24 when the sawing arrangement is in use. Saw blade 4 is provided with a ring of holes 25, which are the openings of a number of channels 26 via which the water can flow towards blocks 27, made of a hard material, like tungsten, into which diamond powder is incorporated, which are specifically cooled in this way. It is also possible to manufacture blade 4 as two concentric, mutually connected tubes, between which some room is left open via which the water can flow. In this embodiment, the bottom side is preferably provided with a connection between the two tubes, in which channels have been made via which water can flow towards blocks 27.

Fig. 6B schematically represents this tubular shaped saw blade 4 in bottom view. Saw blade 4 is connected to a tube 22, which is placed into a drilling machine, with which saw blade 4 is rotated under operational conditions. Round the top side of saw blade 4, a conical shaped collar 23 is mounted which forms a cup-shaped element into which water is fed when the sawing arrangement is in use. In saw blade 4, a ring of channels 26 is made via which the water can flow through the saw blade towards blocks 27, which are specifically cooled in this way. The channels preferably end just before the front sides of blocks 27 or above blocks 27, as shown in the figure.

## Claims

1. Sawing arrangement provided with at least one saw blade, for sawing a material like concrete, stone or asphalt, which saw blade is provided with a cavity through which a cooling medium may flow under operational conditions, **characterised in that** the sawing arrangement is provided with supply means for supplying a liquid as a cooling medium and that the cavity comprises a number of channels of which first ends end near cutting faces of the saw blade.

2. Sawing arrangement according to claim 1, **characterised in that** the supply means are arranged for supplying liquid at least substantially exclusively to those channels which end near cutting faces which touch the material.

3. Sawing arrangement according to claim 1 or 2, **characterised in that** the second ends of the channels end in a ring of holes in the saw blade, which ring of holes is positioned symmetrically round a main axis of the saw blade.

4. Sawing arrangement according to claim 3, **characterised in that** a ring of holes is present on both sides of the saw blade.

5. Sawing arrangement according to claim 3, **characterised in that** the supply means comprise at least one cup-shaped element which connects to at least part of the holes to which the liquid is supplied.

6. Sawing arrangement according to claim 5, **characterised in that** the cup-shaped element encloses substantially all holes on one side of the saw blade.

7. Sawing arrangement according to claim 5, **characterised in that** two cup-shaped elements are provided, placed on opposite sides of the saw blade.

8. Sawing arrangement according to claim 3 or 5, **characterised in that** the saw blade is tubular shaped for sawing circular holes.

9. Saw blade, provided with a cavity, through which a cooling medium may flow under operational conditions, **characterised in that** the saw blade is provided with number of channels, of which first ends end near cutting faces of the saw blade and of which second ends end in a circle of holes which are positioned symmetrically round a main axis of the saw blade.

10. Saw blade according to claim 9, **characterised in that** the saw blade comprises a sandwich of a first outer blade, an inner blade provided with at least substantially radially extending cavities and a second outer blade, where at least one outer blade is provided with a circle of holes which are positioned symmetrically round a main axis of the saw blade, in such a way that the holes connect to the cavities in the inner blade.
